# EUROPEAN PATENT APPLICATION

(11) **EP 2 119 887 A1**
(43) Date of publication of application: **18.11.2009**
(21) Application number: 07793977.5
(22) Date of filing: 09.01.2007
(51) Int. Cl.: F02B 27/06, F01N 5/04, F01N 1/06

(54) **METHOD FOR INCREASING THE FUEL COMBUSTION EFFICIENCY OF AN INTERNAL COMBUSTION ENGINE AND A DEVICE FOR CARRYING OUT SAID METHOD**

(71) Applicant: Vorobiev, Leonid Jurievich, Novosibirsk 630090 (RU); Vorobiev, Jurii Fedorovich, Novosibirsk 630090 (RU); Borisek, Aleksey Stanislavovich, Novosibirsk 630108 (RU)
(72) Inventor: VOROBIEV, Juriy Fedorovich, Novosibirsk, 630090 (RU)
(74) Representative: Sloboshanin, Sergej
(86) International application number: PCT/RU2007/000001
(87) International publication number: WO 2008/085075

(57) **Abstract**

The proposed method consists in forming stationary waves to maintain vibrating combustion mode in an internal combustion engine by organizing the move of exhaust gases in the device in the form of two interacting flows, a vortex one and a central one.

The device comprises (Fig. 1) a body 1 embodied in the form of a plain cylindrical pipe with input 2 and output 3 openings, guide vanes 4 for vortexing the exhaust gases flow embodied as flat deflecting plates 5 fixedly arranged on the internal surface of the pipe at an angle to the central axis 6. Guide vanes 4 have a free paraxial area around the central axis 6 which coaxially connects guide vanes 4 to a generating chamber 7 and a diffuser 8.

Guide vanes 4 divide the exhaust gases flow into two flows, a central paraxial flow 9 and a vortex (peripheral) flow 10. The vortex flow 10 injects (aspirates) the central flow 9 from the free paraxial area. Stationary waves form in the generating chamber 7.

The device enables full fuel combustion in internal combustion engines cylinders.

## Description

### Field of invention

The invention refers to mechanical engineering and can be used in the exhaust emission system of an internal combustion engine of a moving vehicle and a fixed mechanical drive.

### Prior art

Today, different methods and devices are used to increase the efficiency of fuel combustion in an internal combustion engine that are designed to decrease noxious emissions.

Device Patent RU No. 2133350 (MPK⁶ F 01 N 7/20, published on 20.07.1999) designed for emission of exhaust gases of an internal combustion engine is known that, together with upgrading of efficiency of operation of an internal combustion engine, ensures additional purification of exhaust gases by intensification of vortexing that causes the displacement of solid and droplet particles in spiral grooves chambers. The described invention helps to improve environmental situation occurring when venting exhaust gases from a muffler by purifying them due to the vortexing of exhaust gases in the expanding part of a tubular member.

The disadvantage of this device is incomplete combustion of fuel in an internal combustion engine, which causes environmental pollution.

An internal combustion engine (Patent RU No. 2033539 MPK⁶ F 02 B 23/06, published on 20.04.1995) is known, where the engine includes a cylinder with a piston in it, and a cylinder head that together form a combustion chamber made as an acoustic resonator with pits and projections in the piston top and on the head surface placed opposite to each other. Stationary waves generated in the combustion chamber allow intensifying the burning of the fuel. Using the described invention allows to improve economical performance of the engine, however it pollutes the environment with soot and other noxious substances.

Exhaust noise muffler of an internal combustion engine (Patent RU No. 2116468 MPK⁶ F 01 N 1/08, published on 27.07.1998) is known. This described invention helps to increase the efficiency of noise suppression and of muffler gases purification by vortexing and dividing gases. The proposed construction allows to alternate gas separation and further colliding of gas flows, thereby causing the suppression of energy of passing noise of peak pressure that ensures smoothing of gas surging and efficient noise suppression.

The disadvantage of this device is quite high content of CO and CH in the exhaust gases.

A device for the exhaust system of an internal combustion engine (Application RU 95107772, A1, MPK⁶ F 01 N 3/00, published on 10.02.1997) is known. When an internal combustion engine is running exhaust gases are vortexing in vortex generator. Vortexed flow causes exhaust in its central part thereby ensuring the additional gases inflow from the body. Due to centrifugal forces of vortexing flow the unburned fuel vapor, being heavier, remains in centrifugal traps of the accumulator where it bums completely.

The disadvantage of this device is that the soot starts burning at times.

A device for the exhaust system of an internal combustion engine (Patent RU No. 2064052 MPK⁶ F 01 N 3/00, published on 20.07.1996) is known, that comprises a heat sealed body with input and output branch pipes, a collector for gas supply, a vortex generator placed in a chamber that is connected to the accumulator by separating bars. The vortex chamber is divided into sections by diaphragms. Vortex generator, vortex chamber and accumulator are multi-sectioned. The device allows catching and burning down the unburned remains of liquid and fuel vapors.

The complexity of the device can be considered as its disadvantage.

A device for the exhaust system of an internal combustion engine (Patent RU No. 2136907 MPK⁶ F 01 N 3/08, published on 10.09.1999) is known, which can be used in an internal combustion engine to catch, purify and burn down the unburned remains of liquid fuel and fuel vapor of an internal combustion engine and to suppress the exhaust noise. The device for the exhaust system of an ICE comprises a body, input and output branch pipes, a collector, a multi-section vortex generator, a multi-section accumulator, diaphragms, a cone fairing, a shell that is the cover of the accumulator, and vanes (blades). The truncated top of the cone fairing faces the input branch pipe. Vanes are placed tangentially to the external diameter of the output branch pipe. The fairing has a central opening, whose diameter is not more than half of the diameter of the output branch pipe. The vortex generator and accumulator comprise sections formed by diaphragms. The vortex generator and accumulator sections are placed coaxially and in a layered manner, one above the other, in the body. Section diaphragms are made as sidewalls of hollow multifaceted pyramid. In accumulator sections the tops of these walls of multifaceted frusta are directed face to face and their bottoms are connected to each other by a cylindrical shell. This invention allows to increase the efficiency of purification of exhaust gases of internal combustion engines and makes it possible to consider comprehensively the process of transformation of chemical energy of motor fuel into mechanical work.

The disadvantage of this device, as well as the one of the above mentioned, is high complexity of fabrication and high usage of metal.

A method for increasing the efficiency of fuel combustion in an internal combustion engine and the device for this method (Patent RU No. 2156363 MPK⁷ F 01 N 7/00, F 02 B 17/00, published on 20.09.2000) are known. The fuel-air mixture of needed content is loaded into a working cylinder of an internal combustion engine, its combustion is carried out, then the emission valve is opened and the exhaust gas is exhausted via the emission system. The exhaust gas loaded into the muffler causes the backpressure in the muffler exhaust system, thereby delaying the emission of the exhaust gases from the working cylinder of the engine, and thus ensuring a more complete fuel combustion in the working cylinder, then the emission of the exhaust gas from the muffler and the working cylinder of the engine accelerates.

The suggested invention enables more complete fuel combustion in an internal combustion engine; however it doesn't allow minimizing the content of noxious substances in exhaust gases.

Hence, there is a need to develop methods for increasing the efficiency of combustion and devices for exhaust gases emission systems.

The object of the proposed invention is to work out the method for increasing the efficiency of fuel combustion in an internal combustion engine and the device for this method.

### Disclosure of the invention

The object can be fulfilled by increasing the efficiency of fuel combustion in an internal combustion engine using a device in the system of emission of exhaust gases in which there can be organized interacting flows of exhaust gases causing stationary waves coordinated with the vibration of combustion process in internal combustion engine cylinders.

This method consists in forming stationary waves in the device of exhaust gases emission system in order to maintain the vibrating combustion mode in an internal combustion engine by means of organizing the exhaust gases motion in the device as two interacting flows.

Interacting flows, which are a vortex (peripheral) one and a central one, lead to the forming of stationary waves that are coordinated with the vibrating fuel mixture combustion mode in internal combustion engine cylinders within the period of combustion stroke of an internal combustion engine piston.

The proposed device in an internal combustion engine exhaust gases emission system comprises a body with input and output openings, guide vanes for vortexing the exhaust gases flow, a generating chamber and a diffuser.

The body (housing) is in the form of plain cylindrical pipe provided with guide vanes for vortexing the exhaust gases flow. The guide vanes are embodied as flat deflecting plates fixedly arranged on the internal surface of the pipe at an angle to the central axis with variable surfaces increasing in the direction of exhaust gases flow forming a paraxial area that is free of deflecting plates and connects guide vanes to the generating chamber.

The generating chamber is coaxially connected to a diffuser that is made in the form of a hollow cone with a cut off top (pyramid-like) placed into the internal volume of the generating chamber with its smaller base and hermetically connected to the generating chamber by a larger base of the cone, thus closing the chamber.

Preferably, deflection plates in guide vanes for vortexing the exhaust gases flow are half-segments on a centerline plane projection with a free paraxial area.

Preferably, the effective diameter of free paraxial area of guide vanes for vortexing the exhaust gases flow is half the diameter of a smaller base of cone (i.e., cut off top) placed into the internal volume of the generating chamber.

Preferably, guide vanes for vortexing the exhaust gases flow, generating chamber and diffuser are placed symmetrically to the central axis.

The technical result for the claimed solution is an increase of efficiency of fuel combustion in an internal combustion engine and the reduction of emission of noxious substances into the atmosphere.

One of the possible alternative embodiments for the claimed method and the forming of stationary waves during the device operation are shown below.

### Brief description of the several views of the drawings

Fig.1 displays the main view of the claimed device.
Fig.2 displays the device with an A-A sectional drawing.

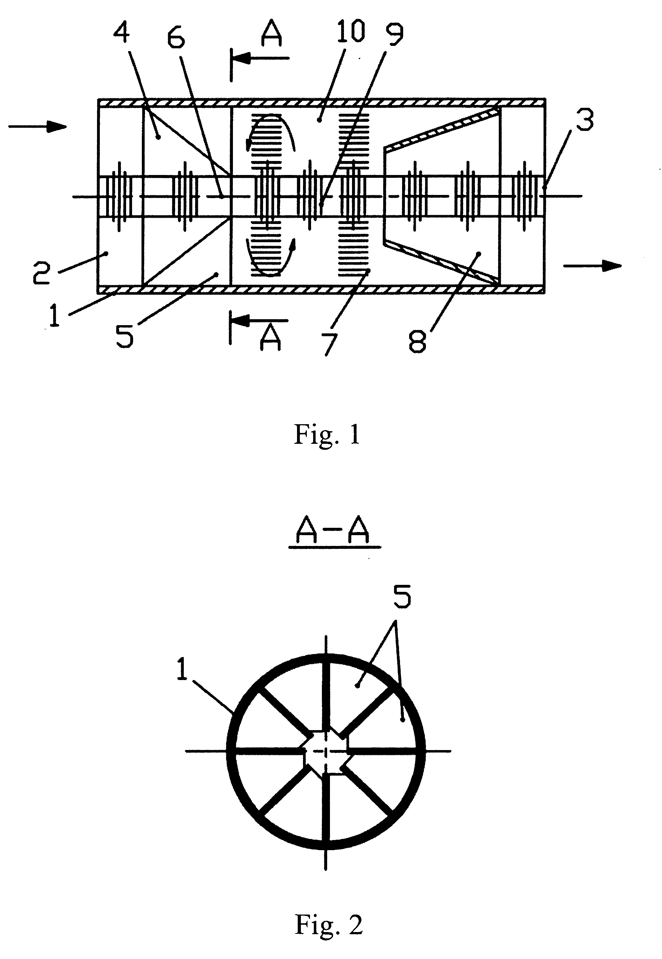

The device comprises (Fig. 1, Fig. 2) a body 1, embodied in the form of a plain cylindrical pipe provided with input 2 and output 3 openings. The device comprises guide vanes 4 for vortexing the exhaust gases flow. Guide vanes 4 are formed as flat deflection plates 5 fixedly arranged on the internal surface of the pipe at an angle to the central axis 6. Guide vanes 4 have a free paraxial area around the central axis 6 that coaxially connects guide vanes to a generating chamber 7. Generating chamber 7 is connected to a diffuser 8. Diffuser 8 is formed as a hollow cone with a cut off top placed into the internal volume of generating chamber 7 with its smaller base and hermetically connected to generating chamber 7 by a larger base of the cone.

Guide vanes 4 divide the exhaust gases flow into two flows, a central paraxial flow 9 and a vortex (peripheral) flow 10. The vortex flow 10 injects (aspirates) the central flow 9 from the free paraxial area.

The device operates as follows.

Turbulent continuous flow of exhaust gases expelled by pistons of an internal combustion engine becomes organized (ordered) when passing deflecting plates 5 with variable surface increasing in the direction of exhaust gases flow, and the free paraxial area. When moving along the surface of deflection plates 5 a part of flow is being vortexed, squeezing up against the internal surface of the cylindrical pipe of the body 1. When entering generating chamber 7 gas flows from deflection plates 5 becomes more dense, coming across the external surface of diffuser 8 and drains in the direction of central axis of the device 6 (radial drainage), through the smaller base of hollow cone of the diffuser 8 the gases enter its expanding part and then are being exhausted into the atmosphere by the exhaust gases emission system through opening 3.

At the same time, a part of central flow 9 in paraxial area goes through the generating chamber 7 with no obstacles on its way enters the exhaust gases emission system through the smaller base of the hollow cone of diffuser 8.

However, the increasing peripheral velocity of vortex peripheral flow 10 in generating chamber 7 causes depression in the paraxial area and thereby accelerates the flow in the paraxial area of the device thus causing a depression wave. The effect of injection (aspiration) by vortex flow is known. The increasing velocity of vortex peripheral flow 10 along with an aspirated part of central paraxial flow 9 increases its mass and due to the law of conservation of angular momentum reduces the velocity, that is to say, slows down.

Direct central flow 9 coming along the free paraxial area slows down, thereby causing a compression wave. Having the excessive mass released vortex peripheral flow 10 accelerates, the depression in the paraxial area grows, causing a depression wave. Thus, a stationary wave appears that contributes to vibrating combustion mode in internal combustion engine cylinders, not in exhaust gases emission system devices.

The frequency of generated impulses depends on density and temperature of passing exhaust gas, on configuration of generating chamber 7 and on output diffuser 8.

The power (vibration amplitude) of a stationary wave depends on the velocity of exhaust gases flow and its mass.

The continuous flow of exhaust gases expelled by pistons of an internal combustion engine going through deflecting plates 5 in the generating chamber 7 makes two interacting flows, which distribute to all sides along the axis of exhaust gases emission system in the form of stationary waves - gas flow vibrations.

Stationary waves enter internal combustion engine cylinders through open output valves (not shown in Fig. 1). Due to vibration of continuous atmosphere in the cylinder, the fuel condensed on the cooled walls of cylinder barrel is being blown off, and fuel-air mixture is being mixed and burned in the cylinder, not in the exhaust gases emission system and its hardware.

At the moment of valve overlap (when input and output valves are simultaneously open) fuel-air mixture is being prepared in gasoline internal combustion engines, and air is being prepared in diesel engines due to the vibration of continuous gaseous atmosphere in vibrating combustion mode.

In an internal combustion engine, fuel-air mixture combusts in the pulsating manner (vibrating combustion occurs), thereby causing the increase of the combustion velocity and consequently the increase of the process energy.

Forming a stationary wave in an exhaust gases emission system makes it possible to maintain vibrating combustion mode in internal combustion engines, thus increasing the efficiency of fuel combustion in an internal combustion engine and reducing the amount of noxious substances exhausted into the atmosphere.

### The best invention embodiment

The best invention embodiment is shown in Fig. 1 and Fig. 2.

Deflecting plates 5 in guide vanes 4 for vortexing exhaust gases flow are half-segments on a centerline plane projection with a free paraxial area that contributes to a better vortexing of exhaust gases flow.

The effective diameter of free paraxial area of guide vanes 4 for vortexing the exhaust gases flow is half the diameter of a smaller base of cone placed into the internal volume of generating chamber 7.

Guide vanes 4 for vortexing the exhaust gases flow, generating chamber 7 and diffuser 8 are placed symmetrically to the central axis 6.

Such embodiment of the device allows to reduce its metal consumption, to simplify its construction without deteriorating technical performance of the device. Such embodiment of the device enables complete fuel combustion in internal combustion engines cylinders and allows minimizing noxious exhausts into the atmosphere.

### Industrial applicability

The proposed device can be used in exhaust gases emission system of an internal combustion engine of a moving vehicle and a stationary mechanical drive.

The proposed device can be used in manufacturing systems with fluid and multiphase flows.

## Claims

1. Method for increasing the fuel combustion efficiency of an internal combustion engine using a device in the exhaust gases emission system **characterized in that** stationary waves are formed in the device in order to maintain vibrating combustion mode in an internal combustion engine by organizing the move of exhaust gases in the device in the form of two interacting flows, a vortex one and a central one, which form stationary waves coordinated with vibrating combustion mode of air-fuel mixture in internal combustion engines cylinders during the combustion stroke of an internal combustion engine piston.

2. Device in the exhaust gases emission system of an internal combustion engine that comprises a body with input and output openings, guide vanes for the exhaust gases flow **characterized in that** the body is embodied in the form of a plain cylindrical pipe provided with guide vanes for the exhaust gases flow embodied as flat deflecting plates fixedly arranged on an internal surface of the cylindrical pipe at an angle to the central axis, with variable surfaces increasing in the direction of exhaust gases, with the forming of a paraxial area which is free of deflecting plates and coaxially connects guide vanes for vortexing the exhaust gases flow to a generating chamber which is coaxially connected to a diffuser that is made in the form of a hollow cone frustum placed into the internal volume of the generating chamber with its smaller base and hermetically connected to the generating chamber by a larger base of the frustum.

3. Device according to claim 2, **characterized in that** deflecting plates in guide vanes for vortexting the exhaust gases flow are half-segments on a centerline plane projection.

4. Device according to claim 2, **characterized in that** the effective diameter of free paraxial area of guide vanes for vortexing the exhaust gases flow is half the diameter of a smaller base of cone frustrum placed into the internal volume of the generating chamber.

5. Device according to any of the claims 2 to 4, **characterized in that** guide vanes for vortexing the exhaust gases flow, a generating chamber and a diffuser are placed symmetrically to the central axis.
